# EUROPÄISCHE PATENTSCHRIFT

(11) **EP 3 682 297 B1**
(45) Veröffentlichungstag und Bekanntmachung des Hinweises auf die Patenterteilung: **12.08.2026**
(21) Anmeldenummer: 18773385.2
(22) Anmeldetag: 13.09.2018
(51) Int. Cl.: G03B 42/00, G03B 43/00, G01T 1/20

(54) **VERFAHREN ZUR ERMITTLUNG DER QUALITÄT EINER SPEICHERFOLIE SOWIE SPEICHERFOLIENSCANNER HIERFÜR**
METHOD FOR DETERMINING THE QUALITY OF AN IMAGING PLATE AND IMAGING PLATE SCANNER THEREFOR
PROCÉDÉ POUR DÉTERMINER LA QUALITÉ D'UN ÉCRAN À MÉMOIRE ET SCANNER POUR ÉCRAN À MÉMOIRE CORRESPONDANT

(30) Priorität: 14.09.2017 DE 102017121338
(43) Veröffentlichungstag der Anmeldung: 22.07.2020
(73) Patentinhaber: Dürr Dental SE, 74321 Bietigheim-Bissingen (DE)
(72) Erfinder: SCHRAMM, Axel, 74360 Ilsfeld (DE); BECK, Matthias, 74369 Löschgau (DE); PHILIPPS, Bernd, 74199 Untergruppenbach (DE); WEBER, Michael, 71576 Burgstetten (DE); HÄNTSCH, Herbert, 71717 Beilstein (DE); LADIKOS, Alexander, 85386 Eching (DE)
(74) Vertreter: Frenkel, Matthias Alexander
(86) Internationale Anmeldenummer: PCT/EP2018/074830
(87) Internationale Veröffentlichungsnummer: WO 2019/053171

(56) Entgegenhaltungen:
- US-A- 5 420 441
- US-A- 5 420 441
- US-A1- 2005 162 178
- US-A1- 2010 266 187
- US-A1- 2013 121 467
- US-A1- 2013 121 467
- AIKATERINI-LAMPRO N. SALVARA ET AL: "Digital Radiographic Systems Quality Control Procedures", RECENT PATENTS ON MEDICAL IMAGINGE, vol. 2, no. 1, 1 April 2012 (2012-04-01), pages 51 - 64, XP055524973, ISSN: 1877-6132, DOI: 10.2174/1877613211202010051
- RAMPADO O ET AL: "Quantitative assessment of computed radiography quality control parameters", PHYSICS IN MEDICINE AND BIOLOGY, INSTITUTE OF PHYSICS PUBLISHING, BRISTOL GB, vol. 51, no. 6, 21 March 2006 (2006-03-21), pages 1577 - 1593, XP020096194, ISSN: 0031-9155, DOI: 10.1088/0031-9155/51/6/015
- AIKATERINI-LAMPRO N. SALVARA ET AL: "Digital Radiographic Systems Quality Control Procedures", RECENT PATENTS ON MEDICAL IMAGINGE, vol. 2, no. 1, 1 April 2012 (2012-04-01), pages 51 - 64, XP055524973, ISSN: 1877-6132, DOI: 10.2174/1877613211202010051
- RAMPADO O ET AL: "Quantitative assessment of computed radiography quality control parameters", PHYSICS IN MEDICINE AND BIOLOGY, INSTITUTE OF PHYSICS PUBLISHING, BRISTOL GB, vol. 51, no. 6, 21 March 2006 (2006-03-21), pages 1577 - 1593, XP020096194, ISSN: 0031-9155, DOI: 10.1088/0031-9155/51/6/015
- IAN D HONEY ET AL: "Artifacts Found During Quality Assurance Testing of Computed Radiography and Digital Radiography Detectors", JOURNAL OF DIGITAL IMAGING ; THE JOURNAL OF THE SOCIETY FOR COMPUTER APPLICATIONS IN RADIOLOGY, SPRINGER-VERLAG, NE, vol. 22, no. 4, 22 April 2008 (2008-04-22), pages 383 - 392, XP019725637, ISSN: 1618-727X

## Beschreibung

### HINTERGRUND DER ERFINDUNG

### 1. Gebiet der Erfindung

Die Erfindung betrifft ein Verfahren zur Ermittlung der Qualität einer Speicherfolie sowie eine Speicherfolie hierfür.

### 2. Beschreibung des Standes der Technik

In der Röntgentechnik, insbesondere in der dentalmedizinischen Röntgentechnik, werden heutzutage Speicherfolien zur Aufnahme von Röntgenbildern verwendet. Diese Speicherfolien umfassen ein Phosphormaterial, das in einer transparenten Matrix eingebettet ist. Dadurch entstehen sogenannte Speicherzentren, die durch einfallendes Röntgenlicht in angeregte metastabile Zustände gebracht werden können. Belichtet man eine solche Speicherfolie in einer Röntgenapparatur, beispielsweise zur Aufnahme eines Bissflügels eines Patienten, so enthält die Speicherfolie ein latentes Röntgenbild in Form von angeregten und nicht angeregten Speicherzentren.

Zum Auslesen der Speicherfolie wird diese in einer Scanvorrichtung punktweise mit Ausleselicht abgetastet, wodurch die metastabilen Zustände der angeregten Speicherzentren in einen Zustand gebracht werden, der schnell unter Abgabe von Fluoreszenzlicht relaxiert. Dieses Fluoreszenzlicht kann mithilfe einer Detektoreinheit erfasst werden, sodass man mit einer entsprechenden Auswerteelektronik das Röntgenbild sichtbar machen kann. Für den Auslesevorgang werden beispielsweise Trommelscanner eingesetzt, welche die Speicherfolie entlang einer zylindrischen Fläche über einen Auslesespalt führen.

Ein großer Vorteil der Speicherfolientechnik besteht in der Wiederverwendbarkeit der Speicherfolien. Eine Speicherfolie kann also nach dem Auslesen, bei dem ohnehin die in der Folie gespeicherte Bildinformation gelöscht wird, in der Regel für viele weitere Aufnahme- und Speichervorgänge eingesetzt werden. Es gibt verschiedene Alterungsvorgänge, welche der Wiederverwendbarkeit Grenzen setzen. Eine solche bilden im Wesentlichen sich im Laufe der Zeit ausbildende lokale Speicherzentren, die nicht mehr anzuregen sind und damit im Speicherabbild dunkel bleiben. Im praktischen Betrieb können auch mechanische Belastungen auftreten, wodurch beispielsweise durch eine unsachgemäße Handhabung auf der Oberfläche der Speicherfolie Kratzer oder punktförmige Beschädigungen auftreten können.

Es ist im praktischen Betrieb wünschenswert, die augenblickliche Speicherqualität einer Speicherfolie zu kennen. Dabei kann man herkömmlicherweise die Speicherfolie in Augenschein nehmen und die auf der Oberfläche befindlichen Kratzer auf ihre Auswirkung auf den Aufnahme- und Auslesevorgang beurteilen. Des Weiteren kann man die Anzahl an Aufnahmen, die mit der Speicherfolie gemacht wurden, zählen oder die Lebensdauer der Speicherfolie anhand eines Produktionsdatums bestimmen. Alle diese Maßnahmen treffen aber keine verlässliche Aussage über die tatsächliche Speicherfähigkeit der Speicherfolie.

Die US 5 420 441 A beschreibt ein automatisiertes Verfahren zur Analyse der photometrischen Kalibrierung und der Bildqualitätsmerkmale eines hochauflösenden Speicherphosphor-Lesegeräts. Ein speziell angefertigtes Testziel mit Bleimaske wird auf einem Speicherphosphor befestigt und mit einer medizinischen Standard-Röntgenquelle belichtet. Ein zu kalibrierender Speicherphosphor-Lesegerät liest den belichteten Speicherphosphor und erzeugt ein digitales Röntgenbild. Das digitale Röntgenbild wird mittels eines Computeralgorithmus analysiert, der die Analyseergebnisse in Text- und Grafikform darstellt, um Probleme des Lesegeräts zu isolieren und den Kalibrierungsstatus des Lesegeräts zu quantifizieren.

Die US 2010/266187 A1 beschreibt ein System, ein Verfahren und computerlesbare Medien zum Erzeugen eines korrigierten Bildes aus Bildinformationen, die aus einer röntgenempfindlichen Platte extrahiert wurden. Zunächst werden Fehlerkartenbildinformationen aus einer röntgenempfindlichen Platte extrahiert, um etwaige Fehler (z. B. Kratzer) auf der Platte zu bestimmen. Anschließend wird die Platte belichtet, um physikalische Bildinformationen (z. B. anatomische Informationen) zu erfassen, und die physikalischen Bildinformationen werden aus der Platte extrahiert. Die Fehlerkarteninformationen werden verwendet, um entsprechende Fehler in den extrahierten physikalischen Bildinformationen zu identifizieren. Es wird eine Bildverarbeitung durchgeführt, um die Fehler (z. B. aufgrund von Kratzern auf der röntgenempfindlichen Platte) in den physikalischen Bildinformationen zu korrigieren und ein korrigiertes physikalisches Bild zu erzeugen.

### ZUSAMMENFASSUNG DER ERFINDUNG

Es ist eine Aufgabe der Erfindung, ein Verfahren zur Ermittlung der Qualität einer Speicherfolie anzugeben, das die oben genannten Nachteile vermeidet und es insbesondere ermöglicht, eine genaue Aussage über die Speicherfähigkeit und -qualität der Speicherfolie zu treffen.

Die Aufgabe wird durch ein Verfahren gemäß dem unabhängigen Anspruch gelöst. Das erfindungsgemäße Verfahren weist die Schritte auf:
Durchführen einer Belichtung der Speicherfolie, Durchführen eines Scans der Speicherfolie zur Ermittlung eines Bildes, Ermitteln eines Signal-zu-Rauschen-Verhältnisses des Bildes und Durchführen einer Kantenerkennung an dem Bild, und Berechnen eines Qualitätswerts der Speicherfolie auf Basis des Signal-zu-Rauschen-Verhältnisses des Bildes und auf Basis der erkannten Kantenstruktur.

Das erfindungsgemäße Verfahren sieht zwei Qualitätsmerkmale vor, die in Kombination zum Einsatz kommen. Das eine Merkmal ist das erwähnte Signal-zu-Rauschen-Verhältnis. Das Signal-zu-Rauschen-Verhältnis des Bildes liefert nach der Durchführung einer Belichtung der Speicherfolie einen Hinweis darauf, ob die Speicherfolie Defekte im Sinne von nicht funktionsfähigen Speicherzentren aufweist. Geben Speicherzentren trotz der gleichförmigen Belichtung der Speicherfolie während des Auslesevorgangs kein Fluoreszenzlicht ab, verschlechtert sich das Signal-zu-Rauschen-Verhältnis.

Das andere Merkmal ist das Durchführen einer Kantenerkennung. Die Kantenerkennung an dem Bild liefert in gleicher Weise Hinweise auf mögliche Defekte. Bei einer gleichförmigen Belichtung der Speicherfolie sollte das sich ergebende Bild eine gleichförmige Ausleuchtung - also einen gleichförmigen Grauwert - ergeben. Finden sich hingegen mittels der Kantenerkennung Strukturen, ist dies ein Hinweis auf mögliche Defekte der Speicherfolie.

Bevorzugt wird das Belichten der Speicherfolie mit einer bestimmten Dosis durchgeführt. Dies erleichtert das Bestimmen des Signal-zu-Rauschen-Verhältnis oder das Durchführen der Kantenerkennung. Allerdings kann die Belichtung und die nachfolgenden Berechnungen auch bei nicht bekannter Dosis durchgeführt werden. Die verwendete Dosis sollte allerdings innerhalb einer Dosis-Bandbreite liegen, innerhalb derer die Speicherfolie nicht unterbelichtet und nicht überbelichtet ist. Die Dosis kann beispielsweise über die Expositionszeit, die Röntgenspannung und die Anodenspannung eingestellt werden.

Bei einer vorteilhaften Ausgestaltung der Erfindung ist vorgesehen, dass der Schritt des Durchführens einer Belichtung das Einstellen eines bestimmten Abstands zwischen der Folie und einem Aufnahmegerät umfasst. Dies erleichtert das Bestimmen des erwarteten absoluten Grauwerts des Bildes und somit die Reproduzierbarkeit der Berechnung des Qualitätswerts der Speicherfolie, ist aber keine notwendige Voraussetzung für ein erfolgreiches Durchführen des Verfahrens. Es ist lediglich sicherzustellen, dass die Speicherfolie weder über- noch unterbelichtet wird. Prinzipiell ist das Wertepaar aus Dosis und Abstand entsprechend zu wählen. Beispielsweise kann ein größerer Abstand durch eine größere Dosis kompensiert werden.

Bei einer Ausführungsform der Erfindung ist vorgesehen, dass das Belichten der Speicherfolie im Rahmen einer normalen Untersuchung erfolgt. Dies bedeutet, dass das Verfahren der Defekterkennung auch an Speicherfolien durchführbar ist, die beispielsweise an Patienten belichtet wurden und die deshalb ein Bild enthalten. Das Auswerteverfahren - also das Ermitteln des Signal-zu-Rauschen-Verhältnis oder/und das Durchführen einer Kantenerkennung zeichnet erkannte Defekte auf und ordnet diese der Speicherfolie zu. Nach einem wiederholten Gebrauch der Speicherfolie und einem erneuten Durchführen einer Defekterkennung können wieder auftretende Defekte als solche registriert und gekennzeichnet werden. Mögliche auftretende Artefakte wie beispielsweise durch röntgenundurchlässige Gegenstände (beispielsweise Metallfüllungen), die sich auf der Aufnahme abbilden, können entsprechend erkannt, bewertet und als solche gekennzeichnet werden.

Eine Weiterentwicklung der Erfindung sieht vor, dass das Ermitteln eines Signal-zu-Rauschen-Verhältnisses das Anwenden eines Maskenfilters umfasst. Dabei kann der Maskenfilter beispielsweise einen Rand der Speicherfolie - beispielsweise ein oder zwei Millimeter - von der Berechnung des Signal-zu-Rauschen-Verhältnisses ausschließen. Der Rand der Speicherfolie kann hierbei fest vorgegeben oder von einer bedienenden Person eingebbar sein. Alternativ oder zusätzlich kann der Maskenfilter neben dem Rand auch andere Markierungen der Speicherfolie ausschließen. Dabei können die Markierungen auch mittels morphologischer Operationen erkannt und zu dem Maskenfilter hinzugefügt werden.

Bei einer besonders bevorzugten Ausführungsform der Erfindung ist vorgesehen, dass das Ermitteln des Signal-zu-Rauschen-Verhältnisses das Ermitteln eines lokalen Signal-zu-Rauschen-Verhältnisses für einen oder mehrere Ausschnitte des Bildes umfasst. Beispielsweise kann ein Feld mit einer Größe von 21 mal 21 Pixeln als Grundlage für die Berechnung des Signal-zu-Rauschen-Verhältnisses dienen. Für eine solche Feldgröße kann auf dem gesamten Bild ein lokales Signal-zu-Rauschen-Verhältnis berechnet werden. Es ergibt sich somit für jeden Pixel des Bildes ein zugehöriger Signal-zu-Rauschen-Verhältnis-Wert (mit Ausnahme eines Randstreifens entsprechend den 21 mal 21 Pixeln). Bereiche mit einem niedrigen lokalen Signal-zu-Rauschen-Verhältnis entsprechen Bereichen, die vermutlich einen Defekt aufweisen. Es kann hierbei beispielsweise ein Schwellenwert festgelegt werden. Der Schwellenwert kann beispielsweise mit Hilfe der Maximal- und Minimalwerte des lokal ermittelten Signal-zu-Rauschen-Verhältnis ermittelt werden. Hierfür kann beispielsweise das Verhältnis aus dem um den Minimalwert verringerten Signal-zu-Rauschen-Wert und der Differenz aus Maximalwert und Minimalwert ermittelt werden. Ein Pixel kann beispielsweise als Defekt markiert werden, wenn das eben beschriebene Verhältnis 0,2 oder kleiner beträgt, d.h. dass das lokale Signal-zu-Rauschen-Verhältnis 20 % oder weniger des möglichen Wertebereichs beträgt.

Alternativ oder zusätzlich kann bei einer Ausführungsform vorgesehen sein, dass eine Beschädigung der Speicherfolie anhand einer erkannten Kantenstruktur bestimmt wird. Mittels der Kantenerkennung können Fehlstellen - also beispielsweise nicht mehr funktionsfähige Speicherzentren - als Strukturen in der ansonsten gleichförmig belichteten Folie erkannt werden.

Bei einer bevorzugten Ausführungsform umfasst das Durchführen einer Kantenerkennung das Einsetzen des Canny-Algorithmus. Bevorzugt kann vor dem Durchführen der Kantenerkennung ein Verwischen bzw. ein Hinzufügen von Unschärfe durchgeführt werden. Dies reduziert die Produktion von Artefakten aufgrund von Pixeln mit einem hohen Anteil an Rauschen. Des Weiteren kann nach dem Durchführen der Kantenerkennung eine Schwellenwertoperation durchgeführt werden, bevorzugt um ein binäres Bild zu erhalten.

Bei einer Weiterbildung der Erfindung kann vorgesehen sein, dass nach dem Durchführen einer Kantenerkennung, insbesondere nach dem Durchführen der Schwellenwertoperation, eine morphologische Dilatation oder/und eine Closing-Operation ausgeführt wird. Mittels der morphologischen Dilatation und der Closing-Operation kann die Sichtbarkeit des einzelnen Bereichs mit Unregelmäßigkeiten/Beschädigungen verbessert werden, da prinzipiell Werte mit einem hohen Grauwert vergrößert und Werte mit einem geringeren Grauwert verkleinert werden. Gleichzeitig können kleine Lücken zwischen solchen Bereichen geschlossen werden.

Das aus der Signal-zu-Rauschen-Operation gewonnene Bild und das Bild, das aus der Kantenerkennung resultiert, werden mittels einer logischen ODER-Operation zusammengefügt. Anhand der sich so ergebenden Gesamtzahl an markierten Pixeln wird die Qualität der Speicherfolie bestimmt. Dabei kann beispielsweise die Anzahl der so markierten Pixel *Nₘₐᵣₖᵢₑᵣₜ* gemäß der folgenden Formel zu einer die Qualität der Speicherfolie repräsentierenden Zahl umgerechnet werden: ${f}_{markiert} = - ln \frac{{N}_{markiert}}{{N}_{gesamt} - {N}_{Maske}}$

Dabei stellt *fₘₐᵣₖᵢₑᵣₜ* die Qualitätsbewertung der Speicherfolie, *Nₘₐᵣₖᵢₑᵣₜ* die Anzahl an markierten Bildpixeln, *N_{gesamt}* die Gesamtanzahl an Pixeln in dem betrachteten Bild dar und *N_{Maske}* die Anzahl der durch die Ausschlussmaske maskierten Folienrand- und Markierungspixel dar. Somit erhält eine Speicherfolie mit einem Bild, das eine sehr geringe Anzahl an markierten Pixeln aufweist, eine hohe Bewertung, während Speicherfolien, deren Bilder ein hohe Anzahl an markierten, d.h. fehlerhaften Pixeln aufweisen, eine niedrige Bewertung.

Um die so gewonnenen Bewertung einer Speicherfolie in einen Bereich zwischen 0 und 1 zu skalieren und um eine Anpassung der Gewichtung der einzelnen ermittelten/markierten Merkmale zu ermöglichen, kann die Bewertung *fₘₐᵣₖᵢₑᵣₜ* wie folgt transformiert werden: ${f}_{final} = {w}_{0} + {w}_{1} {f}_{markiert}$

Dies erlaubt einen Vergleich der so gewonnenen Bewertung mit anderen Bewertungskriterien, wie beispielsweise durch optische Begutachtung und anschließende Bewertung einer Speicherfolie. Dabei kann beispielsweise vorgesehen sein, dass die Parameter *w*₀ und *w*₁ durch eine lineare Regression auf einem Trainingsdatensatz so gewählt werden, dass der sich ergebende finale Wert möglichst gut mit einer Expertenbewertung der Folienqualität übereinstimmt.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: in einem Ablaufdiagramm eine erste Ausführungsform eines erfindungsgemäßen Verfahrens;
- Figur 2: in einem Ablaufdiagramm eine erste Weiterbildung des Verfahrens der Figur 1;
- Figur 3: in einem Ablaufdiagramm eine zweite Ausführungsform des Verfahrens der Figur 1;
- Figur 4: in einem Ablaufdiagramm eine zweite alternative oder zusätzliche Ausführungsform des Verfahrens der Figur 3; und
- Figur 5: in einer schematischen Darstellung einen erfindungsgemäßen Speicherfolienscanner.

### BESCHREIBUNG BEVORZUGTER AUSFÜHRUNGSBEISPIELE

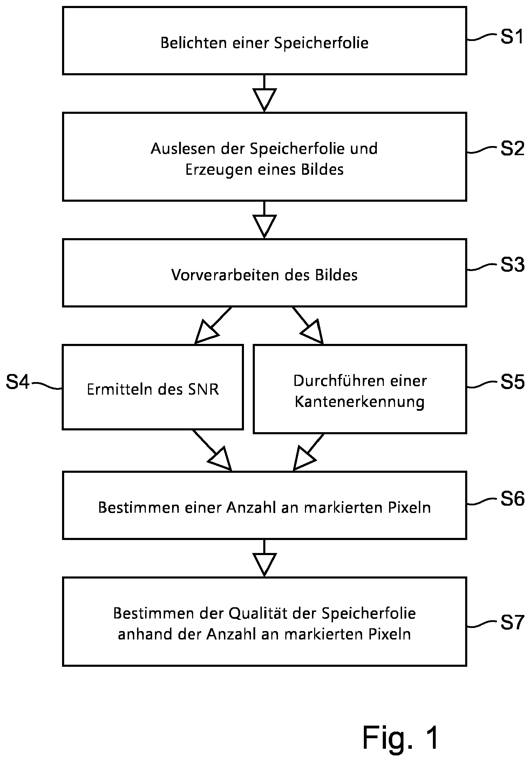

Figur 1 veranschaulicht in einem vereinfachten schematischen Ablaufdiagramm ein Ausführungsbeispiel eines erfindungsgemäßen Verfahrens. Das Verfahren umfasst den Schritt des Belichtens einer Speicherfolie (S1). Bei dem Belichten der Speicherfolie ist es von Vorteil, wenn die Speicherfolie mit einer bestimmten Dosis belichtet wird. Es hat sich als vorteilhaft herausgestellt, wenn die Speicherfolie von dem Aufnahmegerät innerhalb eines vordefinierten Abstands positioniert wird. Es haben sich in der Praxis 12 cm bewährt, die als Durchmesser einer CD eingestellt werden können. Als Einstellung für das Röntgengerät kann beispielsweise die Einstellung für modulare Zähne verwendet werden.

Im nächsten Schritt wird die Speicherfolie ausgelesen und ein digitales Bild erzeugt (S2). Nach oder während dem Auslesen kann die Dosis ermittelt werden, mit der die Speicherfolie belichtet wurde. Es kann eine Ausgabe an den Bediener erfolgen, ob die Dosis zu hoch oder zu niedrig gewählt wurde. Gegebenenfalls muss der Bediener die Speicherfolie erneut belichten, da sich das Signal-zu-Rauschen-Verhältnis mit der Dosis ändern kann.

Im nächsten Schritt wird das Bild für das Bestimmen der Qualität der Speicherfolie vorverarbeitet (S3). Der Schritt des Vorverarbeitens (S3) wird nachstehend detailliert erläutert.

Nach dem Vorverarbeiten (S3) können zwei Verfahrensblöcke gleichzeitig parallel, nacheinander oder/und alternativ zu einander abgearbeitet werden.

Es kann das vorverarbeitete Bild in eine Maske transformiert werden, in welcher Pixel markiert sind, bei denen ein Signal-zu-Rauschen-Verhältnis unterhalb eines bestimmten Schwellenwerts liegt (S4). Alternativ oder zusätzlich kann an dem vorverarbeiteten Bild eine Kantenerkennung durchgeführt werden (S5), anhand derer eine Maske erzeugt werden kann, in welcher die so erkannten Pixel markiert sind.

Mittels dieser beiden Masken kann eine gesamte Anzahl markierter Pixel bestimmt werden (S6). Setzt man diese Anzahl markierter Pixel mit der Gesamtzahl aller Pixel (verringert um die Anzahl der Pixel der Ausschlussmaske) ins Verhältnis, kann anhand dieses Verhältnisses die Qualität der Speicherfolie bestimmt werden (S7).

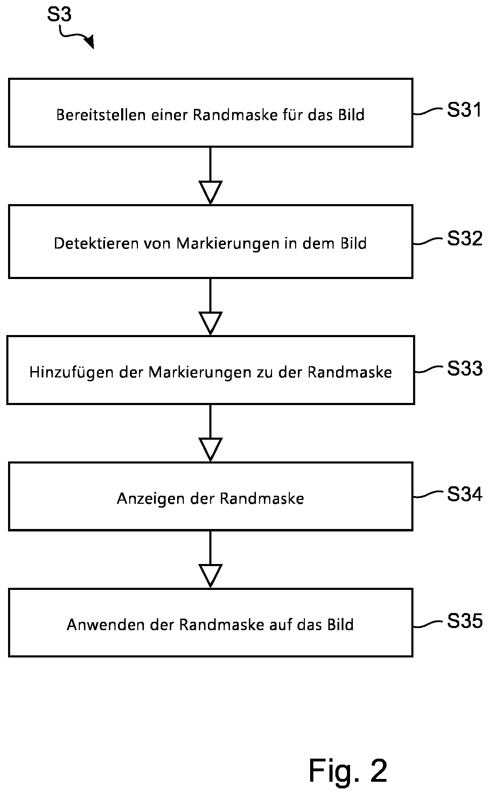

Im Folgenden wird auf das Vorverarbeiten (S3) des aus dem Auslesevorgang erhaltenen Bildes näher eingegangen. Figur 2 zeigt eine mögliche Ausführungsform des Vorgangs des Vorverarbeitens (S3). Für das ausgelesene Bild wird eine Randmaske bereitgestellt (S31). Bei der Randmaske kann es sich beispielsweise um einen um den Rand des Bildes umlaufenden Abstand handeln, außerhalb dessen die Bilddaten verworfen bzw. nicht für eine Verarbeitung herangezogen werden. Bei den gängigen Größen für Speicherfolien beispielsweise für den Oralbereich (von 2×3 cm bis ca. 6×8 cm) genügen ein bis zwei Millimeter, die als umlaufender Rand freibleiben sollten. Dieser Abstand kann festeingestellt oder vom Bediener frei wählbar sein.

In einem weiteren Schritt werden mögliche Markierungen detektiert, die auf der Speicherfolie angebracht sind und nicht zum eigentlichen Bildinhalt gehören (S32). Das Detektieren kann beispielsweise mittels einer morphologischen Operation erfolgen und kann beispielsweise nach bekannten Strukturen in dem Bildinhalt suchen. Erkannte Markierungen oder ähnliche Strukturen werden zu der Randmaske, die damit zu einer Ausschlussmaske wird, hinzugefügt (S33).

Optional kann die so erstellte Rand- bzw. Ausschlussmaske einem Bediener zu Kontroll- oder/und zu Informationszwecken angezeigt werden (S34).

Die so erstellte Ausschlussmaske oder Randmaske wird auf das ausgelesene Bild angewendet (S35), wodurch sich ein vorverarbeitetes Bild ergibt. Dieses wird einem der nächsten Schritte (S4, S5) zugrunde gelegt.

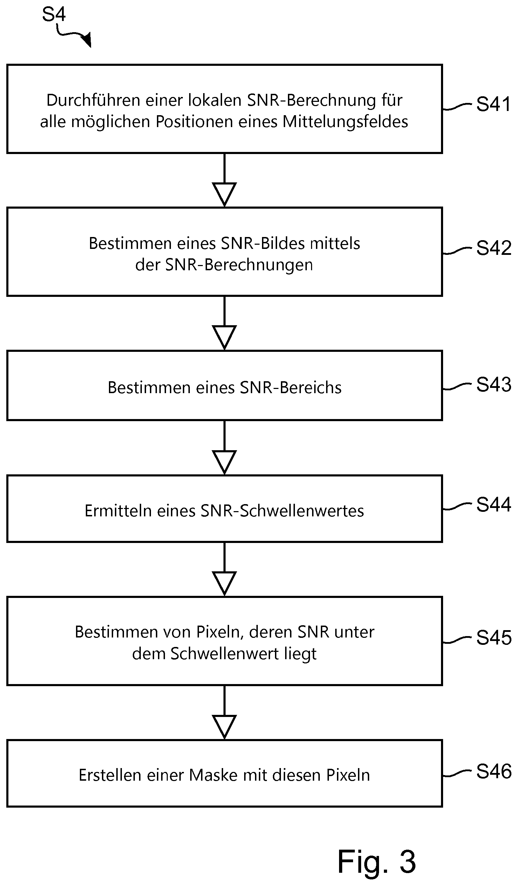

Figur 3 veranschaulicht in einem Ablaufdiagramm einige Aspekte einer Ausführungsform eines Verfahrens zur Ermittlung einer Anzahl an nicht mehr operablen Pixeln einer Speicherfolie mittels einer Berechnung eines Signal-zu-Rauschen-Verhältnisses (S4). Das Verfahren (S4) umfasst als erstes das Durchführen (S41) eines lokalen Signal-zu-Rauschen-Verhältnisses ("Signal to Noise Ratio", SNR). Dabei wird ein Mittelungsfeld festgelegt, innerhalb dessen das SNR für alle darin enthaltenen Pixel als ein Wert ermittelt wird. Der so ermittelte Wert wird entsprechend einem der darin enthaltenen Pixel zugeordnet. Dieser Berechnungsschritt wird an allen in dem Bild möglichen Positionen durchgeführt. Das Mittelungsfeld wird gewissermaßen Pixel für Pixel weitergeschoben und an der neuen Stelle wird jeweils ein lokales SNR berechnet. Es ergibt sich somit für nahezu jeden Pixel in dem Bild (mit Ausnahme eines Randstreifens entsprechend der gewählten Größe des Mittelungsfeldes) ein SNR. Diese Werte können als SNR-Bild des vorverarbeiteten Bildes aufgefasst und dargestellt werden (S42). In der Praxis hat sich bei den genannten Speicherfoliengrößen und den entsprechenden Bildgrößen ein Mittelungsfeld von 21×21 Pixeln als günstig herausgestellt. Es sind auch andere Mittelungsfeldgrößen denkbar, die beispielsweise nur halb so groß oder doppelt so groß sind.

In einem weiteren Schritt (S43) wird als zusätzliche Größe ein SNR-Bereich ermittelt (S43). Dabei können die lokalen SNR-Werte für die Berechnung des SNR-Bereichs herangezogen werden. Beispielsweise können ein Minimalwert und ein Maximalwert ermittelt werden. Alternativ kann ein globaler SNR-Wert aus den lokalen SNR-Werten oder alleine auf Basis des vorverarbeiteten Bildes errechnet werden.

In einem weiteren Schritt (S44) wird ein SNR-Schwellenwert bestimmt. Dieser kann sich an dem SNR-Bereich orientieren. Es kann alternativ oder zusätzlich ein lokaler SNR-Werte in die Bestimmung des SNR-Schwellenwertes eingehen. Der SNR-Schwellenwert kann beispielsweise wie folgt berechnet werden: $\frac{{SNR}_{lokal} \left(x, y\right) - {SNR}_{min}}{{SNR}_{max} - {SNR}_{min}} ,$ wobei *SNRₗₒₖₐₗ*(*x, y*) den lokalen SNR-Wert, *SNRₘᵢₙ* den minimalen und *SNRₘₐₓ* den maximalen SNR-Wert darstellen. Liegt dieser Wert bei 20 % oder darunter, wird der entsprechende Pixel als defekt markiert. Es sind aber auch andere Prozentwerte wie beispielsweise 10 % oder 30 % denkbar.

Mittels des so bestimmten SNR-Schwellenwertes können nun die Pixel in dem SNR-Bild ermittelt werden, deren SNR unterhalb des SNR-Schwellenwerts liegt (S45).

Die so markierten Pixel werden in einem weiteren Schritt (S46) zu einer Maske zusammengefasst, welche die nicht mehr operablen Bereich der Speicherfolie - anhand des SNR ermittelt - markiert.

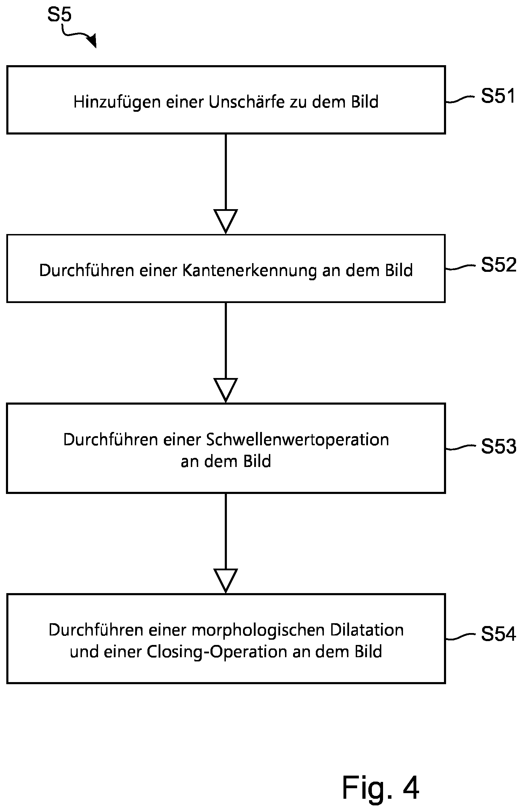

Figur 4 veranschaulicht in einem Ablaufdiagramm eine Ausführungsform eines Verfahrens (S5) zur Bestimmung nicht mehr funktionsfähiger Bereiche einer Speicherfolie anhand eines Kantenerkennungsverfahrens. Diese Ausführungsform wird gleichzeitig zu dem Verfahren eingesetzt, das ein Ermitteln des Signal-zu-Rauschen-Verhältnisses vorsieht.

In einem ersten Schritt wird dem vorverarbeiteten Bild eine Unschärfe hinzugefügt (S51). Das Hinzufügen der Unschärfe dient dem Zweck, eine zu starke Reaktion des Kantenerkennung-Algorithmus auf einzelne stark verrauschte Pixel zu vermeiden.

Danach wird (S52) eine Kantenerkennung an dem so vorbereiteten Bild durchgeführt. Hierbei kann beispielsweise der Canny-Algorithmus zum Einsatz kommen. Es sind aber auch andere Kantenerkennung-Algorithmen denkbar. Das Ergebnis des Kantenerkennung-Algorithmus ist wiederum ein Bild, das mittels einer Schwellenwertoperation (S53) in ein binäres Bild (als Bildwerte existieren nur 0 oder 1) umgewandelt wird. Die Wahl des Schwellenwertes hängt beispielsweise von der allgemeinen Bildqualität, dem Rauschniveau, der Güte des Auslesevorgangs etc. ab.

An dem so umgewandelten Kantenerkennungs-Bild können zur besseren Sichtbarkeit der detektierten Strukturen eine morphologische Dilatation und eine Closing-Operation durchgeführt werden, um kleine Lücken oder Löcher in den Kanten zu füllen (S54). So ergibt sich eine zweite Maske, welche ebenfalls Bereiche in dem Bild und damit mittelbar der Speicherfolie markiert, welche nicht mehr ordnungsgemäß funktionieren.

Die so auf zweierlei Weise erzeugten Bildmasken können beispielsweise mittels einer logischen Oder-Operation miteinander verknüpft werden. Die gewonnen Anzahl an Beschädigungen in Form nicht mehr funktionstüchtiger Pixel kann - wie bereits weiter oben ausführlich erläutert wurde - in eine Bewertung der Speicherfolie umgerechnet werden gemäß den Formeln ${f}_{markiert} = - ln \frac{{N}_{markiert}}{{N}_{gesamt} - {N}_{Maske}}$ und ${f}_{final} = {w}_{0} + {w}_{1} {f}_{markiert}$

Die Gewichtungsfaktoren w₀ und w₁ können für ein Anpassen des Qualitätsprüfungsverfahrens an die gewünschte Skalierung der Qualitätseinstufung der jeweiligen Speicherfolie verwendet werden und können beispielsweise mittels einer linearen Regression auf einem Trainigsdatensatz so ermittelt werden, dass der sich ergebende finale Wert möglichst gut mit einer Expertenbewertung der Folienqualität übereinstimmt.

Es hat sich bei einem Vergleich der Qualitätseinstufung mittels des oben dargestellten Verfahrens und den Einstufungsergebnissen von Experten (Zahnmediziner, Techniker) eine weitgehend hohe Korrelation der beiden Einstufungen ergeben.

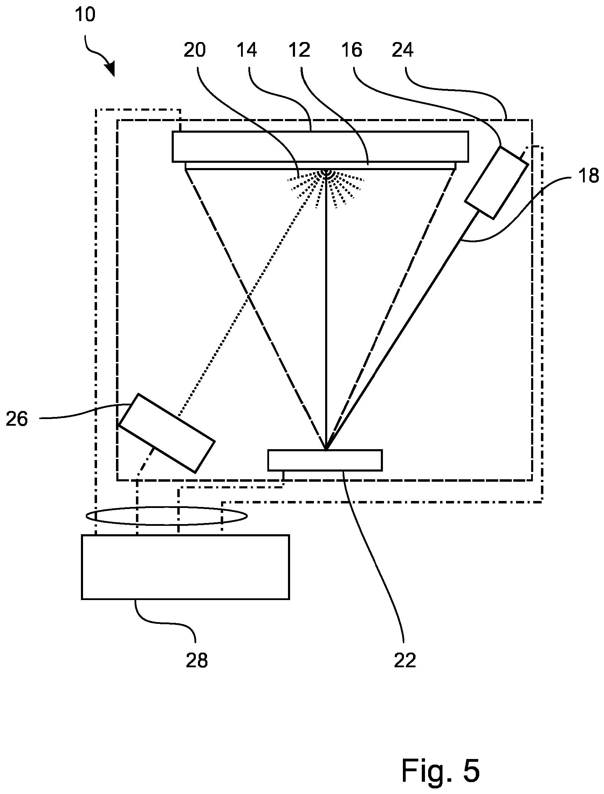

Figur 5 zeigt eine Scanvorrichtung 10 zum Auslesen einer Speicherfolie 12, die in Form von durch Röntgenstrahlung angeregte metastabile Speicherzentren ein latentes Röntgenbild trägt. Die Scanvorrichtung 10 weist eine Stützvorrichtung 14 für die Speicherfolie 12 auf. Beispielsweise kann die Speicherfolie 12 auf der Stützvorrichtung 14 mit Unterdruck so befestigt sein, dass die Speicherfolie 12, die im allgemeinen flexibel ist, sich plan an die Stützfläche 14 anschmiegt. Die Scanvorrichtung 10 umfasst ferner als Ausleselichtquelle einen Laser 16, der einen Ausleselichtstrahl 18 mit einer im Roten liegenden Wellenlänge erzeugt, mit dem die metastabilen Speicherzentren der Speicherfolie 12 zu Fluoreszenzlicht angeregt werden können. Dieses Fluoreszenzlicht 20 liegt typischerweise im Blauen.

In der vorliegenden Ausführungsform der Scanvorrichtung 10 ist der Laser 16 so angeordnet, dass er den Ausleselichtstrahl 18 auf eine steuerbare Ablenkeinheit richtet. Die steuerbare Ablenkeinheit ist vorliegend als Spiegel 22 ausgebildet. Es sind auch andere Ablenkeinheiten wie etwa Optiken oder dergleichen denkbar. Der Spiegel 22 kann als Mikrospiegel, insbesondere als MEMS-Komponente ausgeführt sein und so ein Abtasten der Fläche der Speicherfolie 12 ohne oder mit nur geringer Relativbewegung zwischen Spiegel 22 und Stützvorrichtung 14 ermöglichen. Alternativ kann der Spiegel 22 auch als rotierender Spiegel für einen Trommelscanner vorgesehen sein. In diesem Fall ist eine Relativbewegung zwischen der Stützvorrichtung 14 und dem Spiegel 22 mittels einer Transportverrichtung (nicht abgebildet) realisiert. Eine weitere Technik des Auslesens der Speicherfolie 12 umfasst die Verwendung eines rotierenden Pentaprismas.

Die Scanvorrichtung 10 kann ferner einen in der Zeichnung gestrichelt angedeuteten Reflektor 24 umfassend, welche den gesamten Messraum um die Speicherfolie 12 herum lichtdicht umschließt, so dass das von der Speicherfolie 12 ausgehende Fluoreszenzlicht 20 zu einem Fotodetektor 26 reflektiert wird. Um zu verhindern, dass gestreutes Ausleselicht 18 in den Photodetektor 26 gelangt, können geeignete Maßnahmen wie etwa ein dichroitisches Filtermaterial vorgesehen sein. Zur Steuerung des Auslesevorgangs umfasst die Scanvorrichtung 10 eine Steuereinheit 28, die neben der Steuerfunktion auch Auswerte- oder Korrekturfunktionen wahrnehmen kann. In der vorliegend gezeigten Ausführungsform ist die Steuereinheit 28 dazu eingerichtet, eines der vorgenannten Verfahren zur Ermittlung der Qualität einer Speicherfolie durchzuführen.

## Patentansprüche

1. Verfahren zur Ermittlung der Qualität einer Speicherfolie, mit dem Schritten
a) Durchführen einer Belichtung der Speicherfolie (S1);
b) Durchführen eines Scans der Speicherfolie zur Ermittlung eines Bildes (S2);
c) Ermitteln eines Signal-zu-Rauschen-Verhältnisses des Bildes (S4) und Durchführen einer Kantenerkennung an dem Bild (S5); und
d) Berechnen eines Qualitätswertes der Speicherfolie auf Basis des Signal-zu-Rauschen-Verhältnisses des Bildes und auf Basis der erkannten Kantenstruktur (S6, S7), wobei eine Anzahl an Beschädigung zur Bestimmung der Qualität einer Speicherfolie anhand eines Bildes ermittelt wird, das eine logische ODER-Verknüpfung zwischen einem Bild, welches Beschädigungen anhand eines niedrigen Signal-zu-Rauschen-Verhältnisses ausweist, und einem Bild, das Beschädigungen anhand einer Kantenerkennung ausweist.

2. Verfahren nach Anspruch 1, wobei der Schritt des Durchführens einer Belichtung das Einstellen eines bestimmten Abstands zwischen der Folie und einem Aufnahmegerät umfasst.

3. Verfahren nach einem der vorhergehenden Ansprüche, wobei das Ermitteln eines Signal-zu-Rauschen-Verhältnisses das Anwenden eines Maskenfilters umfasst (S31).

4. Verfahren nach einem der vorhergehenden Ansprüche, wobei das Ermitteln des Signal-zu-Rauschen-Verhältnisses das Ermitteln eines lokalen Signal-zu-Rauschen-Verhältnisses für einen oder mehrere Ausschnitte des Bildes umfasst (S41, S42) .

5. Verfahren nach einem der vorhergehenden Ansprüche, mit dem Schritt des Bestimmens einer Anzahl an oder/und einer Größe von Beschädigungen anhand eines lokal niedrigen Signal-zu-Rauschen-Verhältnisses.

6. Verfahren nach einem der vorhergehenden Ansprüche, wobei eine Beschädigung anhand einer erkannten Kantenstruktur bestimmt wird (S5).

7. Verfahren nach einem der vorhergehenden Ansprüche, wobei das Durchführen einer Kantenerkennung das Einsetzen des Canny-Algorithmus umfasst.

8. Verfahren nach einem der vorhergehenden Ansprüche, wobei nach dem Durchführen einer Kantenerkennung eine morphologische Dilatation oder/und eine Closing-Operation ausgeführt wird (S54).

9. Speicherfolienscanner, der dazu eingerichtet ist, eines der vorgenannten Verfahren durchzuführen.

## Claims

1. A method for determining the quality of an imaging plate, comprising the steps of
a) carrying out an exposure of the imaging plate (S1);
b) carrying out a scan of the imaging plate in order to determine an image (S2);
c) determining a signal-to-noise ratio of the image (S4) and carrying out an edge recognition on the image (S5); and
d) calculating a quality value of the imaging plate on the basis of the signal-to-noise ratio of the image and on the basis of the recognized edge structure (S6, S7), wherein a number of instance of damage is determined in order to ascertain the quality of an imaging plate on the basis of an image which a logic OR-link between an image which identifies instances of damage on the basis of a low signal-to-noise ratio and an image which identifies instances of damage on the basis of an edge recognition.

2. The method as claimed in claim 1, wherein the step of carrying out an exposure comprises setting a specific distance between the plate and a recording device.

3. The method as claimed in either of the preceding claims, wherein determining a signal-to-noise ratio comprises applying a mask filter (S31).

4. The method as claimed in any of the preceding claims, wherein determining the signal- to-noise ratio comprises determining a local signal-to-noise ratio for one or more segments of the image (S41, S42).

5. The method as claimed in any of the preceding claims, comprising the step of ascertaining a number or/and a size of instances of damage on the basis of a locally low signal-to-noise ratio.

6. The method as claimed in any of the preceding claims, wherein an instance of damage is ascertained on the basis of a recognized edge structure (S5).

7. The method as claimed in any of the preceding claims, wherein carrying out an edge recognition comprises using the Canny algorithm.

8. The method as claimed in any of the preceding claims, wherein after carrying out an edge recognition, a morphological dilatation or/and a closing operation is performed (S54).

9. An imaging plate scanner configured to carry out one of the methods mentioned above

## Revendications

1. Procédé pour déterminer la qualité d'une plaque mémoire, comprenant les étapes de :
a) réalisation d'une exposition de la plaque mémoire (S1) ;
b) réalisation d'une numérisation de la plaque mémoire pour obtenir une image (S2) ;
c) détermination d'un rapport signal/bruit de l'image (S4) et exécution d'une détection de contours sur l'image (S5) ; et
d) calcul d'une valeur de qualité de la plaque mémoire sur la base du rapport signal/bruit de l'image et sur la base de la structure de contours détectée (S6, S7), un nombre de dommages étant déterminé pour évaluer la qualité d'une plaque mémoire sur la base d'une image qui effectue une combinaison logique OU entre une image présentant des dommages sur la base d'un faible rapport signal/bruit et une image présentant des dommages sur la base d'une détection de contours.

2. Procédé selon la revendication 1, dans lequel l'étape de réalisation d'une exposition comprend le réglage d'une distance déterminée entre la plaque et un appareil de prise de vue.

3. Procédé selon l'une quelconque des revendications précédentes, dans lequel la détermination d'un rapport signal/bruit comprend l'application d'un filtre de masquage (S31).

4. Procédé selon l'une quelconque des revendications précédentes, dans lequel la détermination du rapport signal/bruit comprend la détermination d'un rapport signal/ bruit local pour une ou plusieurs parties de l'image (S41, S42).

5. Procédé selon l'une quelconque des revendications précédentes, comprenant l'étape de détermination d'un nombre et/ou d'une taille de dommages sur la base d'un rapport signal/bruit localement faible.

6. Procédé selon l'une quelconque des revendications précédentes, dans lequel un dommage est déterminé sur la base d'une structure de contours détectée (S5).

7. Procédé selon l'une quelconque des revendications précédentes, dans lequel l'exécution d'une détection de contours comprend l'utilisation de l'algorithme de Canny.

8. Procédé selon l'une quelconque des revendications précédentes, dans lequel, après l'exécution d'une détection de contours, une dilatation morphologique et/ou une opération de fermeture est effectuée (S54).

9. Scanner de plaques mémoires, conçu pour la mise en œuvre de l'un des procédés susmentionnés.
